(19) Europäisches Patentamt
European Patent Office
Office européen des brevets

(11) **EP 0 834 942 B1**

(12) **FASCICULE DE BREVET EUROPEEN**

(45) Date de publication et mention
de la délivrance du brevet:
**13.11.2002 Bulletin 2002/46**

(51) Int Cl.$^7$: **H01M 2/16**, H01M 10/34

(21) Numéro de dépôt: **97402264.2**

(22) Date de dépôt: **29.09.1997**

(54) **Générateur électrochimique secondaire à électrolyte alcalin**

Sekundärbatterie mit alkalischem Elektrolyten

Alkaline electrolyte secondary battery

(84) Etats contractants désignés:
**DE ES FI FR GB IE IT NL SE**

(30) Priorité: **03.10.1996 FR 9612056**

(43) Date de publication de la demande:
**08.04.1998 Bulletin 1998/15**

(73) Titulaire: **SAFT
F-93230 Romainville (FR)**

(72) Inventeurs:
• **Senyarich, Stéphane
16600 Mornac (FR)**
• **Viaud, Patrick
33000 Bordeaux (FR)**

(74) Mandataire: **Lamoureux, Bernard et al
COMPAGNIE FINANCIERE ALCATEL
Département de la Propriété Industrielle,
30, Avenue Kléber
75116 Paris (FR)**

(56) Documents cités:
**EP-A- 0 552 790          EP-A- 0 680 107
WO-A-93/01622**

• **PATENT ABSTRACTS OF JAPAN vol. 017, no.
683 (E-1477), 15 décembre 1993 & JP 05 234577
A (YUASA CORP), 10 septembre 1993,**
• **DATABASE WPI Section Ch, Week 8036 Derwent
Publications Ltd., London, GB; Class A17, AN
80-63014C XP002054634 & JP 55 096 554 A
(MATSUSHITA ELEC IND CO LTD), 22 juillet 1980**

## Description

La présente invention concerne un générateur électrochimique secondaire à électrolyte alcalin, notamment un accumulateur nickel-métal hydrurable (Ni-MH).

Les générateurs électrochimiques secondaires ont comme principal intérêt leur aptitude au stockage de l'énergie. Mais un générateur complètement chargé qui n'est pas utilisé perd rapidement une partie de sa charge. Les accumulateurs Nickel-Cadmium (Ni-Cd) sont par exemple utilisés depuis très longtemps comme source d'énergie autonome. Ils sont connus pour posséder une bonne rétention de charge, c'est à dire que lorsqu'ils sont stockés à l'état chargé leur capacité diminue lentement. La charge perdue par un accumulateur Ni-Cd complètement chargé est d'environ 20% en 7 jours à 40°C.

Les appareils portables actuels nécessitant des sources d'énergie autonome de plus en plus importantes, un nouveau couple a été récemment développé. Il s'agit de l'accumulateur nickel-métal hydrurable (Ni-MH). Cet accumulateur possède une capacité volumique au moins égale à celle de l'accumulateur Ni-Cd, par contre il présente une forte autodécharge ce qui est très pénalisant pour l'utilisateur. En effet la charge perdue par un accumulateur Ni-MH stocké à l'état complètement chargé est environ deux fois plus importante que pour un accumulateur Ni-Cd, soit 40% en 7 jours à 40°C. Ce mauvais résultat est dû au fait que l'électrode MH une fois chargée possède un caractère réducteur supérieur à celui de l'électrode Cd.

L'autodécharge est généralement attribuée pour partie à des navettes azotées. D'une part l'ammoniac et les nitrites présents dans l'accumulateur s'oxydent en nitrates sur l'électrode positive chargée, ce qui a pour conséquence de la décharger. D'autre part les nitrates et les nitrites se réduisent en ammoniac sur l'électrode négative chargée, ce qui a pour conséquence de la décharger elle aussi. Ces réactions peuvent se dérouler plusieurs fois puisque les espèces générées à l'électrode positive vont réagir sur l'électrode négative où elles se transforment en espèces capables de réagir avec l'électrode positive. C'est pourquoi on parle de navettes.

La réduction des nitrates et des nitrites en ammoniac se trouve accélérée sur une électrode MH. Si cette réaction est l'étape limitante de la cinétique de la navette azotée, ceci signifie que dans un laps de temps donné davantage de navettes pourront se produire dans un accumulateur Ni-MH. Cette hypothèse est généralement admise pour expliquer l'autodécharge importante des accumulateurs Ni-MH (Ikoma et al., J. Electrochem. Soc., 143 6, 1996, 1904-1907).

Dans un générateur électrochimique, l'électrode positive et l'électrode négative sont séparées par un matériau isolant dont le rôle est d'assurer la conduction ionique en évitant tout contact électrique entre les deux électrodes. Afin de maintenir l'isolation électrique entre les deux électrodes, le séparateur doit être mécaniquement et chimiquement stable dans les conditions d'utilisation. Il doit conserver ses propriétés pendant toute la durée d'utilisation du générateur. En outre, une conductivité ionique élevée nécessite que le séparateur soit mouillé de manière uniforme par l'électrolyte.

Afin de limiter l'influence des espèces azotées, on a proposé notamment de remplacer le séparateur en polyamide, généralement utilisé dans les accumulateurs Ni-MH, par un séparateur en polyoléfine possédant une plus grande stabilité chimique dans ce milieu. En effet un séparateur en polyamide représente une source potentielle d'impuretés azotées du fait de sa détérioration dans l'électrolyte très alcalin utilisé dans les accumulateurs Ni-MH (US-5,278,001).

Aujourd'hui les séparateurs les plus couramment utilisés sont à base de polyéthylène et/ou de polypropylène. On connaît notamment des séparateurs composés de fibres dont le coeur en polypropylène est entouré d'une gaine de polyéthylène. Mais les séparateurs de polyoléfine se mouillent difficilement dans un électrolyte aqueux. Afin d'en améliorer la mouillabilité, les industriels se sont orientés vers l'utilisation de séparateurs greffés par des monomères hydrophiles qui sont généralement des composés vinyliques. La méthode de greffage qui s'est révélée la plus efficace passe par l'utilisation de radiations ionisantes, l'irradiation et le greffage pouvant être réalisés en deux étapes ou simultanément.

Ces séparateurs n'introduisent pas ou très peu d'espèces azotées, néanmoins les autres composants électrochimiques présents dans l'accumulateur demeurent des sources gênantes de composés azotés. Ainsi l'autodécharge d'un accumulateur Ni-MH reste encore très supérieure à celle observées dans les mêmes conditions pour un accumulateur Ni-Cd.

La présente invention a pour but de proposer un séparateur permettant d'augmenter la rétention de charge des générateurs électrochimiques secondaires à électrolyte alcalin, notamment du type nickel-métal hydrurable.

L'objet de la présente invention est un générateur électrochimique secondaire comprenant au moins une électrode positive et une électrode négative placées de part et d'autre d'un séparateur composé de fibres de polyoléfine et greffé par un monomère vinylique, caractérisé en ce qu'il contient un moyen d'absorption et de rétention de l'azote en milieu fortement basique, de pH au moins égal à 12, ledit moyen étant constitué par ledit séparateur.

De manière surprenante on a constaté que, outre le fait qu'il ne génère pas d'espèces azotées, le séparateur selon la présente invention parvient à piéger efficacement les espèces azotées provenant des autres composants électrochimiques. Il permet ainsi de réduire sensiblement la quantité de navettes azotées contribuant à l'autodécharge des accumulateurs Ni-MH, et donc d'augmenter leur rétention de charge.

Ledit séparateur possède une aptitude à absorber et retenir l'azote en milieu fortement basique, de pH au moins égal à 12, dans une proportion au moins égale à $3.10^{-4}$ moles d'azote par gramme de séparateur lorsque lesdites fibres sont constituées d'au moins deux polyoléfines.

Il peut s'agir par exemple d'un séparateur constitué de fibres dont le coeur en polypropylène est entouré d'une gaine de polyéthylène ou d'un mélange de ces fibres avec des fibres ne contenant que du polyéthylène.

Ledit séparateur possède une aptitude à absorber et retenir l'azote en milieu fortement basique, de pH au moins égal à 12, dans une proportion supérieure à $5.10^{-4}$ moles d'azote par gramme de séparateur lorsque lesdites fibres sont constituées d'une seule polyoléfine.

De préférence ladite polyoléfine est choisie parmi le polyéthylène et le polypropylène. Ces polymères ont pour avantage leur stabilité chimique élevée dans le milieu alcalin.

De préférence encore ledit monomère vinylique est choisi parmi l'acide acrylique et l'acide métacrylique. Le greffage par des groupes hydrophiles favorise la mouillabilité du séparateur.

La présente invention a aussi pour objet un procédé de fabrication d'un séparateur apte à absorber et retenir l'azote en milieu fortement basique, composé de fibres de polyoléfine et greffé par un monomère vinylique, comprenant les étapes suivantes:

- on imprègne un séparateur poreux, composé de fibres de polyoléfine non greffées, par une solution aqueuse contenant un monomère vinylique en forçant la pénétration de ladite solution dans la totalité de la porosité dudit séparateur, de telle sorte que le volume de ladite solution retenue par ledit séparateur après ladite imprégnation soit au moins égal au volume poreux dudit séparateur (≥100% du volume poreux),
- on place ledit séparateur imprégné entre deux films de polyoléfine sans présence de gaz entre la surface dudit séparateur imprégné et la surface dudit film,
- on soumet l'ensemble constitué par ledit séparateur et lesdits films à une irradiation par rayonnement ultraviolet afin de réaliser le greffage dudit monomère sur toute la surface de chacune desdites fibres,
- on rince et on sèche ledit séparateur greffé.

Pour permettre à la solution contenant le monomère de baigner la totalité de la surface de chaque fibre et permettre sa répartition homogène sur toute la longueur des fibres jusqu'au coeur du séparateur, la simple immersion du séparateur dans la solution est insuffisante. Il est indispensable de forcer la solution à occuper toute la porosité du séparateur. Ceci peut être réalisé par aspiration de la solution au travers du séparateur par exemple à l'aide d'une pompe aspirante.

De préférence, ladite solution contient en outre un agent d'amorçage du greffage, par exemple la benzophénone.

En outre le séparateur doit rester constamment baigné par la solution de monomère pendant toute la durée de l'opération de greffage. Il est donc nécessaire de limiter la perte de solution pouvant se produire durant cette étape, notamment par évaporation.

De préférence, le volume de ladite solution retenue par ledit séparateur après ladite imprégnation et ladite irradiation est au moins égal au volume poreux dudit séparateur (≥100% du volume poreux).

Selon une variante avantageuse, une circulation de ladite solution est ménagée entre ledit séparateur et lesdits film pendant ladite irradiation. Ainsi le séparateur est entouré de solution et la perte par évaporation est supprimée. Une réserve de solution neuve contenant le monomère à greffer reste toujours disponible au contact du séparateur, et la solution appauvrie est évacuée.

De préférence, ledit rinçage est effectué avec de l'eau désionisée. Il faut éviter d'utiliser des solvants difficiles à éliminer et/ou susceptibles de réagir chimiquement avec le séparateur greffé.

On obtient ainsi un séparateur fabriqué par le procédé décrit précédemment, dans lequel ledit monomère est greffé de manière homogène sur toute la surface de chacune desdites fibres.

L'invention a encore pour objet un générateur électrochimique secondaire nickel-métal hydrurable comprenant au moins une électrode positive et une électrode négative placées de part et d'autre d'un séparateur fabriqué par le procédé décrit précédemment.

Selon une première variante de réalisation de l'invention, lesdites fibres de polyoléfine sont constituées d'un mélange de polyéthylène et de polypropylène et ledit monomère est l'acide acrylique, ledit séparateur possédant une aptitude à absorber et retenir l'azote dans une proportion au moins égale à $3.10^{-4}$ moles d'azote par gramme de séparateur.

Selon une deuxième variante de réalisation de l'invention, lesdites fibres de polyoléfine sont constituées d'une seule polyoléfine choisie parmi le polyéthylène et le polypropylène et ledit monomère est l'acide acrylique, ledit séparateur possédant une aptitude à absorber et retenir l'azote dans une proportion supérieure à $5.10^{-4}$ moles d'azote par gramme de séparateur.

D'autres caractéristiques et avantages de la présente invention apparaîtront au cours des exemples suivants de réalisation, donnés bien entendu à titre illustratif et non limitatif, et dans le dessin annexé sur lequel:

- la figure 1 représente une vue schématique du procédé de fabrication du séparateur selon l'invention,
- la figure 2 montre une variante de l'étape d'irradiation du procédé,
- la figure 3 est une vue en coupe par microscopie électronique à balayage (MEB) d'un séparateur selon l'invention,
- la figure 4 est analogue à la figure 3 3 pour un séparateur qui ne fait pas partie de l'invention.

EXEMPLE 1

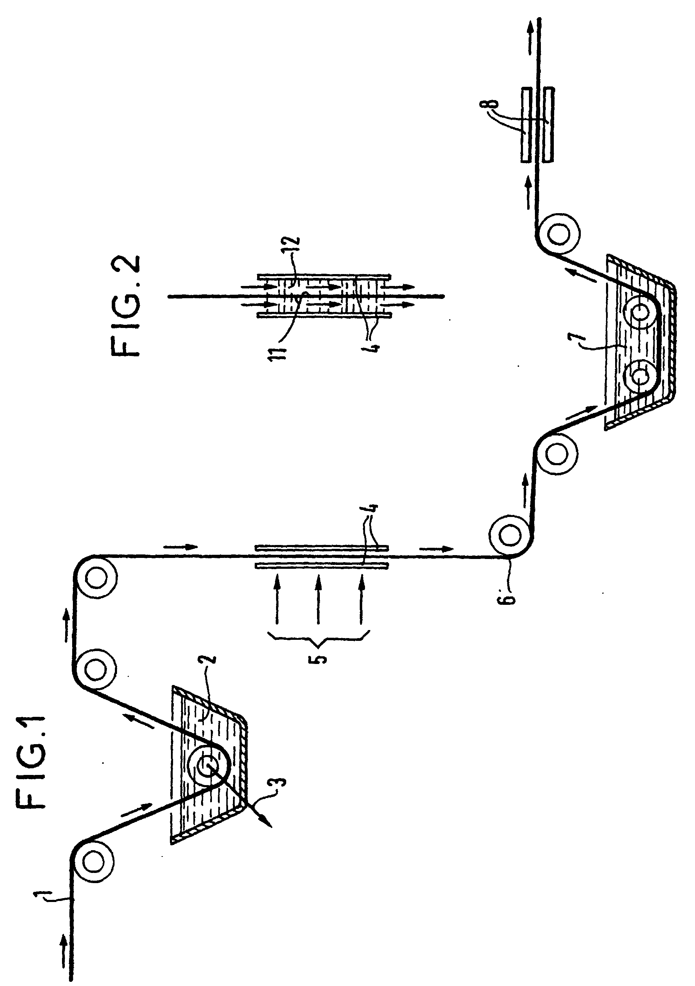

On fabrique selon le procédé de la présente invention illustré par la figure 1, un séparateur greffé A constitué d'un matériau non-tissé comprenant des fibres constituées d'un mélange de 25% en poids de polyéthylène et 75% en poids de polypropylène.

Au cours d'une première étape, le séparateur non greffé est imprégné par une solution aqueuse 2 contenant de l'acide acrylique et un photoamorceur. Le photoamorceur est un agent destiné à accroître la sensibilité du polymère aux rayons ultraviolet. La solution est aspirée à travers le séparateur à l'aide d'une pompe aspirante 3, ce qui permet à la solution de pénétrer complètement au coeur du séparateur. Ainsi la totalité des fibres constituant le séparateur sont accessibles au greffage. La prise de poids du séparateur est de 348% (différence entre le poids initial du séparateur et son poids après imprégnation, ramené au poids initial), ce qui représente 129% du volume poreux du séparateur.

La deuxième étape comprend l'irradiation et le greffage simultanés. Deux films de polypropylène 4 coextrudés, transparents aux U.V. et d'épaisseur $50\mu m$, sont disposés au contact intime de chacune des face du séparateur de telle sorte qu'il n'y ait plus de gaz entre le séparateur et les films. Le séparateur encadré des deux films 4 est soumis à un rayonnement ultraviolet 5 d'une puissance de 2kW afin de réaliser le greffage. Une partie de la solution imprégnant le séparateur s'en échappe au cours de cette opération (évaporation, ...) et la prise de poids n'est plus que de 312% après irradiation, soit 116% de la porosité. Le séparateur greffé 6 est alors rincé à l'eau désionisée 7 puis séchée 8 pendant 12 heures à 70°C.

A titre de comparaison un séparateur A' greffé dans des conditions analogues à celles appliquées au séparateur A mais sans utiliser d'aspiration lors de l'imprégnation ni de films de polypropylène lors de l'irradiation, présentera une prise de poids de seulement 245% après imprégnation, soit 91% du volume poreux, qui descendra à 107% après irradiation (40% du volume poreux). Il est clair que dans ces conditions la solution n'a pas pénétré jusqu'au coeur du séparateur.

On mesure l'aptitude à absorber et retenir l'azote du séparateur greffé A de la manière suivante.

Le récipient utilisé est un erlenmeyer de contenance $250cm^3$ dont le bouchon rodé a été abondamment lubrifié par de la graisse silicone. L'erlenmeyer contient $125cm^3$ d'une solution aqueuse de KOH de concentration 8N, contenant initialement $15.10^{-4}$ moles de $NH_3$, dans laquelle on introduit 2 grammes du séparateur A. Après agitation, l'erlenmeyer est placé pendant au moins trois jours à 40°C, puis 2h à 5°C pour éviter l'évaporation de l'ammoniac à l'ouverture du bouchon. Un échantillon de 100ml de la solution est prélevé et l'ammoniac restant est dosé selon la méthode de KJELDAHL. On distille $NH_3$ qui est recueilli dans $10cm^3$ d'une solution de HCl de concentration 0,1N. Le dosage en retour de HCl s'effectue par une solution aqueuse d'hydroxyde de potassium KOH de concentration 0,1N en présence d'un indicateur coloré qui est une solution alcoolique de rouge de méthyle à 1% massique.

La capacité du séparateur à absorber et retenir l'azote est définie comme la différence entre le nombre de moles de $NH_3$ introduites initialement dans l'erlenmeyer et le nombre de moles de $NH_3$ présentes dans la solution, pour 1 gramme de séparateur.

Pour le séparateur A le dosage montre qu'il reste $8,6.10^{-4}$ moles de $NH_3$ dans la solution. La capacité de piégeage du séparateur A est donc de $3,2.10^{-4}$ moles d'azote par gramme de séparateur.

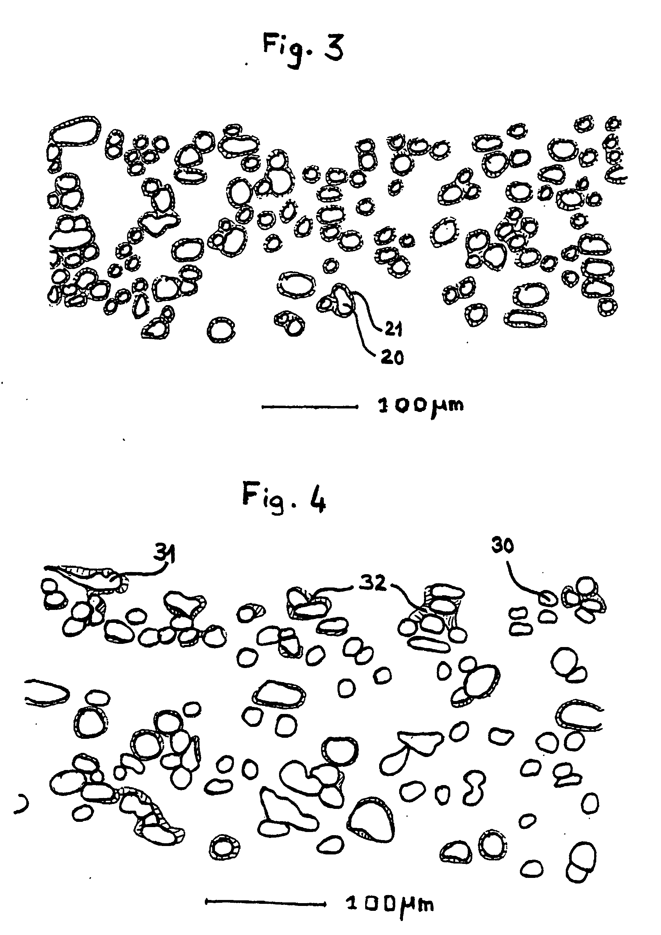

La répartition du monomère à la surface des fibres est étudiée par microscopie électronique à balayage (MEB). Un échantillon de séparateur greffé est enrobé de résine et poli de manière à privilégier l'observation des fibres dans le sens transversal. La surface de l'échantillon est alors mise en contact avec une solution d'un sel de césium, puis rincée à l'eau distillée et séchée. L'observation au microscope de plusieurs échantillons du séparateur A montre que dans le cas de ce dernier toutes les fibres 20 ont été greffées par le monomère 21 (cf. figure 3), et que le monomère est réparti uniformément sur toute la surface le long des fibres.

On réalise un accumulateur I Ni-MH comprenant une électrode positive dont la matière active est de l'hydroxyde de nickel et une électrode négative dont la matière active est un alliage métallique capable d'absorber l'hydrogène. Ces deux électrodes sont séparées par 0,5g de séparateur greffé. L'ensemble est spiralé et placé dans un godet de format AA qui est rempli d'un électrolyte aqueux composé d'un mélange d'hydroxyde de potassium KOH, d'hydroxyde de sodium NaOH et d'hydroxyde de lithium LiOH. La quantité d'espèces azotées contenues dans l'accumulateur et susceptible de participer aux navettes azotées précédemment décrites correspond à $1,4.10^{-4}$ moles d'azote.

L'accumulateur I contenant le séparateur A a donc une capacité de piégeage de $1,6.10^{-4}$ moles d'azote, ce qui est supérieure à la quantité d'azote présente dans l'accumulateur.

L'accumulateur I est évalué électrochimiquement en stockage dans les conditions suivantes. L'accumulateur I est chargé puis déchargé à deux reprises, puis on mesure la capacité $C_2$ déchargée au deuxième cycle à un régime de C/5 (régime permettant la décharge de sa capacité nominale en 5 heures). Une troisième charge est effectuée durant 16 heures à un régime de C/10 (régime permettant la décharge de sa capacité nominale en 10 heures). L'accumulateur est ensuite stocké à potentiel libre pendant 7 jours à 40°C. Après retour à la température ambiante, l'accumulateur est complètement déchargé à un régime de C/5 (régime permettant la décharge de sa capacité nominale en 5 heures), afin de déterminer la capacité restante $C_3$.

On définit la perte de capacité P comme la différence entre la capacité déchargée $C_2$ obtenue lors de la seconde décharge et la capacité déchargée $C_3$ obtenue après le repos de 7 jours à 40°C, divisée par la capacité déchargée $C_2$ obtenue lors de la seconde décharge:

$$P(\%) = \frac{C_2 - C_3}{C_2}$$

Dans le cas de l'accumulateur I contenant le séparateur A, la perte de capacité P est de 21%.

EXEMPLE 2

On fabrique un séparateur greffé B selon la présente invention analogue au séparateur A, par le procédé décrit dans l'exemple 1 à l'exception du fait que l'étape d'irradiation est réalisée de la manière suivante illustrée par la figure 2.

Deux films 4 de polypropylène coextrudés, transparents aux U.V. et d'épaisseur 50μm, sont disposés de part et d'autre du séparateur de telle sorte qu'il subsiste un faible espace (épaisseur au moins égale à 0,5mm) entre la surface 11 du séparateur et chacun des films 4. Cet espace 12 est rempli de la solution d'imprégnation décrite dans l'exemple 1 de manière à en chasser le gaz. La solution se trouvant entre le séparateur et les films est soumise à une circulation forcée, par exemple par gravité, afin que la solution baignant la surface 11 du séparateur soit continûment renouvelée. Puis le séparateur est soumis à un rayonnement ultraviolet 5 d'une puissance de 2kW afin de réaliser le greffage. Le séparateur est donc baigné par la solution circulant entre les parois de polypropylène et simultanément exposé au rayonnement UV.

On mesure l'aptitude à absorber et retenir l'azote du séparateur B de la manière décrite dans l'exemple 1. Le dosage montre qu'il reste $8,6.10^{-4}$ moles de $NH_3$ dans la solution. La capacité de piégeage du séparateur B est donc de $3,2.10^{-4}$ moles d'azote par gramme de séparateur.

EXEMPLE 3

A titre de comparaison, on étudie un séparateur greffé C commercial portant la référence 700/30 greffé par la société SCIMAT. Le séparateur C est constitué d'un matériau non-tissé comprenant des fibres constituées d'un mélange de 25% en poids de polyéthylène et 75% en poids de polypropylène.

On mesure l'aptitude à absorber et retenir l'azote du séparateur C de la manière décrite dans l'exemple 1. Le dosage montre qu'il reste $9,6.10^{-4}$ moles de $NH_3$ dans la solution. La capacité de piégeage du séparateur C est donc de $2,7.10^{-4}$ moles d'azote par gramme de séparateur.

La répartition du monomère à la surface des fibres est étudiée par microscopie électronique à balayage (MEB) de la manière décrite dans l'exemple 1. L'observation au microscope de plusieurs échantillons du séparateur C montre que dans le cas de ce dernier certaines fibres ne sont pas greffées 30 (cf. figure 4) et que, sur les fibres greffées 31, la répartition du monomère 32 n'est pas homogène sur toute la surface d'une même fibre 31.

On réalise un accumulateur II Ni-MH analogue à celui décrit dans l'exemple 1, à l'exception du fait qu'il comprend le séparateur C. L'accumulateur II a donc une capacité de piégeage de $1.10^{-4}$ moles d'azote, ce qui est inférieure à la quantité d'azote présente dans l'accumulateur.

Dans le cas de l'accumulateur II contenant le séparateur C, on observe une perte de capacité P en stockage de 53%.

EXEMPLE 4

On fabrique un séparateur greffé D selon la présente invention de la manière décrite dans l'exemple 1. Le séparateur D est constitué d'un matériau non-tissé comprenant des fibres constituées exclusivement de polypropylène.

On mesure l'aptitude à absorber et retenir l'azote du séparateur D de la manière décrite dans l'exemple 1. Le dosage montre qu'il reste $3,6.10^{-4}$ moles de $NH_3$ dans la solution. La capacité de piégeage du séparateur D est donc de $5,7.10^{-4}$ moles de $NH_3$ par gramme de séparateur.

On réalise un accumulateur III Ni-MH analogue à celui décrit dans l'exemple 1, à l'exception du fait que la quantité d'espèces azotées présentes dans l'accumulateur correspond à $2.4.10^{-4}$ moles d'azote et qu'il comprend le séparateur D. L'accumulateur III a donc une capacité de piégeage de $2,85.10^{-4}$ moles d'azote, ce qui est supérieur à la quantité d'azote présente dans l'accumulateur.

Dans le cas de l'accumulateur III contenant le séparateur D, on observe une perte de capacité P en stockage de 21%.

EXEMPLE 6

A titre de comparaison, on étudie un séparateur greffé E commercial, portant la référence 700/9 greffé par la société SCIMAT. Le séparateur E est constitué d'un matériau non-tissé comprenant des fibres constituées exclusivement de polypropylène.

On mesure l'aptitude à absorber et retenir l'azote du séparateur E de la manière décrite dans l'exemple 1. Le dosage montre qu'il reste $5,6.10^{-4}$ moles de $NH_3$ dans la solution. La capacité de piégeage du séparateur E est donc de $4,7.10^{-4}$ moles d'azote par gramme de séparateur.

On réalise un accumulateur IV Ni-MH analogue à celui décrit dans l'exemple 4, à l'exception du fait qu'il comprend le séparateur E. L'accumulateur IV a donc une capacité de piégeage de $2,35.10^{-4}$ moles d'azote qui est inférieure à la quantité d'azote présente dans l'accumulateur.

Dans le cas de l'accumulateur IV contenant le séparateur E, la perte de capacité P est de 48%.

Les résultats obtenus dans les exemples 1 à 5 sont rassemblés dans le tableau ci-dessous:

TABLEAU 1

| accumulateur | séparateur | | piégeage | autodécharge |
|---|---|---|---|---|
| réf. | réf. | fibres | moles de N/g | % |
| I | A | PP+PE | $3,2.10^{-4}$ | 21 |
| - | B | PP+PE | $3,2.10^{-4}$ | - |
| II | C | PP+PE | $2,7.10^{-4}$ | 53 |
| III | D | PP | $5,7.10^{-4}$ | 21 |
| IV | E | PP | $4,7.10^{-4}$ | 48 |

**Revendications**

1. Générateur électrochimique secondaire à électrolyte alcalin comprenant au moins une électrode positive et une électrode négative placées de part et d'autre d'un séparateur composé de fibres de polyoléfine et greffé par un monomère vinylique, **caractérisé en ce qu'**il contient un moyen d'absorption et de rétention de l'azote en milieu fortement basique, de pH au moins égal à 12, ledit moyen étant constitué par ledit séparateur possédant une aptitude à absorber et retenir l'azote dans une proportion au moins égale à $3.10^{-4}$ moles d'azote par gramme de séparateur lorsque lesdites fibres sont constituées d'au moins deux polyoléfines et dans une proportion supérieure à $5.10^{-4}$ moles d'azote par gramme de séparateur lorsque lesdites fibres sont constituées d'une seule polyoléfine.

2. Générateur selon la revendication 1, dans lequel ladite polyoléfine est choisie parmi le polyéthylène et le polypropylène.

3. Générateur selon l'une des revendications 1 et 2, dans lequel ledit monomère vinylique est choisi parmi l'acide acrylique et l'acide métacrylique.

4. Procédé de fabrication d'un séparateur apte à absorber et retenir l'azote en milieu fortement basique, composé de fibres de polyoléfine et greffé par un monomère vinylique, procédé comprenant les étapes suivantes:

   - on imprègne un séparateur poreux, composé de fibres de polyoléfine non greffées, par une solution aqueuse contenant un monomère vinylique en forçant la pénétration de ladite solution dans la totalité de la porosité dudit séparateur, de telle sorte que le volume de ladite solution retenue par ledit séparateur après ladite imprégnation soit au moins égal au volume poreux dudit séparateur,

- on place ledit séparateur imprégné entre deux films de polyoléfine sans présence de gaz entre la surface dudit séparateur imprégné et la surface dudit film,
- on soumet l'ensemble constitué par ledit séparateur et lesdits films à une irradiation par rayonnement ultraviolet afin de réaliser le greffage dudit monomère sur toute la surface de chacune desdites fibres,
- on rince et on sèche ledit séparateur greffé.

**5.** Procédé selon la revendication 4, dans lequel le volume de ladite solution retenue par ledit séparateur après ladite imprégnation et ladite irradiation est au moins égal au volume poreux dudit séparateur.

**6.** Procédé selon l'une des revendications 4 et 5, dans lequel une circulation de ladite solution est ménagée entre ledit séparateur et lesdits film pendant ladite irradiation.

**7.** Procédé selon l'une des revendications 4 à 6, dans lequel ladite solution contient en outre un agent d'amorçage du greffage.

**8.** Procédé selon l'une des revendications 4 à 7, dans lequel ledit rinçage est effectué avec de l'eau désionisée.

**9.** Séparateur fabriqué par le procédé selon l'une des revendications 4 à 8, dans lequel ledit monomère est greffé de manière homogène sur toute la surface de chacune desdites fibres.

**10.** Générateur électrochimique secondaire nickel-métal hydrurable comprenant au moins une électrode positive et une électrode négative placées de part et d'autre d'un séparateur fabriqué par le procédé selon l'une des revendications 4 à 8, dans lequel lesdites fibres de polyoléfine sont constituées d'un mélange de polyéthylène et de polypropylène et ledit monomère est l'acide acrylique, ledit séparateur possédant une aptitude à absorber et retenir l'azote dans une proportion au moins égale à $3.10^{-4}$ moles d'azote par gramme de séparateur.

**11.** Générateur électrochimique secondaire nickel-métal hydrurable comprenant au moins une électrode positive et une électrode négative placées de part et d'autre d'un séparateur fabriqué par le procédé selon l'une des revendications 4 à 8, dans lequel lesdites fibres de polyoléfine sont constituées d'une seule polyoléfine choisie parmi le polyéthylène et le polypropylène et ledit monomère est l'acide acrylique, ledit séparateur possédant une aptitude à absorber et retenir l'azote dans une proportion supérieure à $5.10^{-4}$ moles d'azote par gramme de séparateur.

**Patentansprüche**

**1.** Sekundärer elektrochemischer Generator mit alkalischem Elektrolyten, welcher wenigstens eine positive Elektrode und eine negative Elektrode umfasst, die beiderseits einer Trennwand platziert sind, welche aus Polyolefinfasern besteht und mit einem Vinylmonomer veredelt ist,
**dadurch gekennzeichnet, dass** er ein Mittel zum Absorbieren und Rückhalten von Stickstoff in stark basischer Umgebung, mit einem pH von wenigstens 12, enthält, wobei das Mittel durch die Trennwand gebildet ist, welche geeignet ist, Stickstoff in einem Anteil von wenigstens $3 \cdot 10^{-4}$ Mol Stickstoff pro Gramm Trennwand zu absorbieren und zurückzuhalten, wenn die Fasern aus wenigstens zwei Polyolefinen bestehen, und in einem Anteil von mehr als $5 \cdot 10^{-4}$ Mol Stickstoff pro Gramm Trennwand wenn die Fasern aus einem einzigen Polyolefin bestehen.

**2.** Generator nach Anspruch 1, bei welchem das Polyolefin aus Polyethylen und Polypropylen gewählt ist.

**3.** Generator nach einem der Ansprüche 1 und 2, bei welchem das Vinylinonomer aus Acrylsäure und Metacrylsäure gewählt ist.

**4.** Verfahren zur Herstellung einer Trennwand, welche geeignet ist, Stickstoff in stark basischer Umgebung zu absorbieren und zurückzuhalten, welche aus Polyolefinfasern besteht und mit einem Vinylpolymer veredelt ist, welches Verfahren die folgenden Schritte umfasst:

- man imprägniert eine poröse Trennwand, welche aus nichtveredelten Polyolefinfasern besteht, mit einer ein Vinylmonomer enthaltenden wässrigen Lösung, indem das Eindringen der Lösung in die Gesamtheit der Porosität der Trennwand erzwungen wird, derart, dass das Volumen der von der Trennwand nach dem Imprägnieren zurückgehaltenen Lösung dem Porenvolumen der Trennwand wenigstens gleich ist,

- man platziert die imprägnierte Trennwand zwischen zwei Polyolefinfilme, ohne Vorliegen von Gas zwischen der Oberfläche der imprägnierten Trennwand und der Oberfläche des Films,
- man setzt die aus der Trennwand und den Filmen gebildete Anordnung einer ultravioletten Bestrahlung aus, um die Veredelung des Monomers auf der gesamten Oberfläche von jeder der Fasern durchzuführen,
- man wäscht und trocknet die veredelte Trennwand.

5. Verfahren nach Anspruch 4, bei welchem das Volumen der von der Trennwand nach dem Imprägnieren und nach der Bestrahlung zurückgehaltenen Lösung dem Porenvolumen der Trennwand wenigstens gleich ist.

6. Verfahren nach einem der Ansprüche 4 und 5, bei welchem eine Zirkulation der Lösung zwischen der Trennwand und den Filmen während der Bestrahlung vorgesehen ist.

7. Verfahren nach einem der Ansprüche 4 bis 6, bei welchem die Lösung außerdem ein Mittel zur Aktivierung der Veredelung enthält.

8. Verfahren nach einem der Ansprüche 4 bis 7, bei welchem das Waschen mit entionisiertem Wasser erfolgt.

9. Trennwand, hergestellt durch das Verfahren nach einem der Ansprüche 4 bis 8, bei welcher das Monomer in homogener Weise auf der gesamten Oberfläche jeder der Fasern veredelt wird.

10. Hydrierbarer sekundärer elektrochemischer Nickel-Metall-Generator, welcher wenigstens eine positive Elektrode und eine negative Elektrode umfasst, die beiderseits einer durch das Verfahren nach einem der Ansprüche 4 bis 8 hergestellten Trennwand platziert sind, bei welchem die Polyolefinfasern aus einer Mischung von Polyethylen und Polypropylen bestehen und das Monomer Acrylsäure ist, wobei die Trennwand geeignet ist Stickstoff in einem Anteil von wenigstens gleich $3 \cdot 10^{-4}$ Mol pro Gramm Trennwand zu absorbieren und zurückzuhalten.

11. Hydrierbarer sekundärer elektrochemischer Nickel-Metall-Generator, welcher wenigstens eine positive Elektrode und eine negative Elektrode umfasst, die beiderseits einer durch das Verfahren nach einem der Ansprüche 4 bis 8 hergestellten Trennwand platziert sind, bei welchem die Polyolefinfasern aus einem einzigen Polyolefin, gewählt aus Polyethylen und Polypropylen, bestehen und das Monomer Acrylsäure ist, wobei die Trennwand geeignet ist Stickstoff in einem Anteil von mehr als $5 \cdot 10^{-4}$ Mol pro Gramm Trennwand zu absorbieren und zurückzuhalten.

**Claims**

1. An alkaline electrolyte secondary electric cell comprising at least one positive electrode and one negative electrode positioned either side of a separator composed of fibres of a polyolefin grafted with a vinyl monomer, **characterized in that** it contains means for absorbing and retaining nitrogen in a strongly basic medium, with a pH of at least 12, said means being constituted by said separator and having an ability to absorb and retain nitrogen in a proportion of at least $3 \times 10^{-4}$ moles of nitrogen per gram of separator when said fibres are constituted by at least two polyolefins and in a proportion of more than $5 \times 10^{-4}$ moles of nitrogen per gram of separator when said fibres are constituted by a single polyolefin.

2. A cell according to claim 1 wherein said polyolefin is selected from polyethylene and polypropylene.

3. A cell according to either claim 1 or claim 2 wherein said vinyl monomer is selected from acrylic acid and methacrylic acid.

4. A process for the production of a separator which can absorb and retain nitrogen in a strongly basic medium, composed of polyolefin fibres grafted with a vinyl monomer, the process comprising the following steps:

- impregnating a porous separator composed of ungrafted polyolefin fibres with an aqueous solution containing a vinyl monomer by forcing said solution to penetrate into all of the pores of said separator such that the volume of said solution retained by said separator after said impregnation is at least equal to the pore volume of said separator;
- placing said impregnated separator between two films of polyolefin with no gas present between the surface of said impregnated separator and the surface of said film;

- irradiating the assembly constituted by said separator and said films with ultraviolet radiation to graft said monomer over the entire surface of each of said fibres; and
- rinsing and drying said grafted separator.

5. A process according to claim 4 wherein the volume of said solution retained by said separator after said impregnation and irradiation is at least equal to the pore volume of said separator.

6. A process according to either claim 4 or claim 5 wherein said solution is circulated between said separator and said films during said irradiation.

7. A process according to any of claims 4 to 6 wherein said solution further contains a graft initiator.

8. A process according to any of claims 4 to 7 wherein said rinsing is carried out using deionized water.

9. A separator produced by the process according to any of claims 4 to 8 wherein said monomer is homogeneously grafted over the entire surface of each of said fibres.

10. A nickel-hydridable metal secondary electric cell comprising at least one positive electrode and one negative electrode positioned either side of a separator produced by the process according to any of claims 4 to 8 wherein said polyolefin fibres are constituted by a mixture of polyethylene and polypropylene and said monomer is acrylic acid, said separator being capable of absorbing and retaining nitrogen in a proportion which is at least $3 \times 10^{-4}$ moles of nitrogen per gram of separator.

11. A nickel-hydridable metal secondary electric cell comprising at least one positive electrode and one negative electrode positioned either side of a separator produced by the process according to any of claims 4 to 8 wherein said polyolefin fibres are constituted by a single polyolefin selected from polyethylene and polypropylene and said monomer is acrylic acid, said separator being capable of absorbing and retaining nitrogen in a proportion which is more than $5 \times 10^{-4}$ moles of nitrogen per gram of separator.

FIG.1

FIG.2

**Fig. 3**

100 μm

**Fig. 4**

100 μm